# EUROPEAN PATENT APPLICATION

(11) **EP 1 530 926 A2**
(43) Date of publication of application: **18.05.2005**
(21) Application number: 04105571.6
(22) Date of filing: 08.11.2004
(51) Int. Cl.: A47B 96/06

(54) **Improved shelf support arrangement**

(30) Priority: 14.11.2003 IT PN20030037
(71) Applicant: Ferramenta Livenza S.r.l., 33070 Maron di Brugnera, Pordenone (IT)
(72) Inventor: Ferro, Renato, 33170, Pordenone (IT)
(74) Representative: Giugni, Valter

(57) **Abstract**

Shelf support arrangement for connecting two distinct parts (A, B) of a cabinet with each other, comprising a central body (2), acting as the main structure, and an actuating member that is movable relative to said central body. Said central body (2) includes at least a first portion (5) adapted to project outwards from said central body, and said first portion (5) and said actuating member (3) are provided with respective surfaces or edges (7, 9) adapted to engage each other when said actuating member is introduced with a rectilinear movement into said central body (2). Said central body also comprises an extension (66) that extends radially outwards and is adapted to engage an appropriate accommodation (12) provided in a part (B) of the cabinet.

## Description

The present invention refers to a particularly improved and simplified shelf support arrangement intended for joining two distinct parts with each other.

In particular, the inventive arrangement refers and applies to the furniture-making industry, where said two distinct parts are a vertical wall, or upright member, and a horizontal surface, or shelf, which must be connected orthogonally to said upright member.

In the following description, use will generally be made of the term "shelf support", which shall however be understood as to refer to and cover the totality of the means adapted to connect, i.e. join two distinct parts, in particular two such parts constituted by two surfaces extending orthogonally to each other.

Shelf support arrangements are generally known in the art to be substantially comprised of two distinct members, usually made of metal, plastics or even wood, which are capable of being coupled with each other in a generally removable manner. In fact, for even too obvious reasons, it is a normal practice in the furniture-making industry to manufacture the various parts of a furniture piece, and in particular the walls and the shelves thereof, individually, i.e. in a fully independent manner, wherein the assembly of those parts is generally not even completed at the factory itself, but rather at a later time in the field.

In view of facilitating the assembly thereof, these parts of a furniture piece, which require being connected to each other, are associated to respective shelf-support devices, i.e. to devices that are adapted to be coupled to each other and are applied, i.e. installed separately, and in various manners, to respective parts of the furniture piece to be completed.

A wide variety of shelf support devices are known in the art, actually, which are specifically designed to cope with different application-related requirements. For example, the requirements deriving from an application in which a shelf has to be simply and plainly placed inside a cabinet without any particular constraint, so that all it takes is to insert some horizontal pegs in corresponding holes provided in the confining walls and then place the shelf to rest thereupon, are quite different from the requirements deriving from an application in which the shelf has to be inserted in such a manner as to prevent the same shelf - upon having been so mounted - from being able to move or displace in any direction, while being firmly retained in the desired position.

In the latter case, use id made usually of either connecting means formed by two distinct members or connecting means consisting of a single member or device; in the first case, it should be noticed that manufacturing and installing two different members or devices on the respective parts of a cabinet or furniture piece unavoidably imply ever increasing costs and production-related complications; in addition, problems arise in this case even when several shelves are to be packed and stored together, since said connecting devices usually protrude from the shelves to which they are applied, so that they make it rather awkward and hazardous to try to stack the shelves upon each other or to pack them in a juxtaposed arrangement. Finally, it should also be noticed that the final coupling of said two members of the connecting devices with each other proves rather tricky, i.e. requires skilful handling, and must in most cases be performed with the use of a tool.

On the other hand, cases are also known in the art, in which use is made of single-member connecting devices, such as disclosed in GB 2 301 412 and EP 1008767A1. However, some major drawbacks are experienced even in these cases, i.e.:
- if, on the one side, these shelf support arrangements actually imply single-member devices, each one of them is on the other side comprised of three distinct pieces that have to be manufactured separately and then assembled together; essentially, these pieces are:
   a) the main body of the shelf-support device, which is designed for application in a proper accommodation provided in one of said parts to be joined;
   b) the operating and engagement member, which is operated to protrude from the body and engage a corresponding aperture or hole provided in the other part to be joined;
   c) a third piece, which is actuated from the outside and is made so that, by acting in connection with the main body, moves into contact with said engagement member b) and pulls it into said hole in said second part to be joined, thereby causing it to engage said hole.

It can therefore be most clearly appreciated that this kind construction still carries some inherent, undesired complication and awkwardness with it.

It therefore would be desirable, and it is actually a main object of the present invention, to provide a shelf support arrangement formed by a single connecting member, which is simpler in its construction and enables the same shelf support arrangement to be right away applied into its respective accommodation when first mounted.

According to the present invention, this aim, along with further ones that will be apparent from the following description, is reached in a shelf support arrangement incorporating the features and characteristics as recited in the claims appended hereto.

Features and advantages of the present invention will anyway be more readily understood from the description that is given below by way of nonlimiting example with reference to the accompanying drawings, in which:
- Figure 1 is a perspective view of a shelf support arrangement according to a first embodiment of the present invention, in a disassembled state thereof;
- Figures 1A and 1B are simplified, enlarged top views of the main body of the shelf support arrangement shown in Figure 1, as viewed in two successive operating phases thereof;
- Figures 2 and 3 are median longitudinal sectional views along the section plane D - D of the shelf support arrangement shown in Figure 1, as viewed when being inserted and upon full insertion thereof, respectively;
- Figures 4 and 5 are vertical cross-sectional views of two successive steps implied in mounting and locking in place the shelf support arrangement shown in the preceding Figures;
- Figure 6 is a perspective view of a second embodiment of a shelf support arrangement according to the present invention, in a disassembled state thereof;
- Figures 7 and 8 are median longitudinal sectional views along the section plane E - E of the shelf support arrangement shown in Figure 6, as viewed when being inserted and upon full insertion thereof, respectively;
- Figures 9 and 10 are vertical cross-sectional views of two successive steps implied in mounting and locking in place the shelf support arrangement shown in the preceding Figures 6 to 8;
- Figure 11 is a perspective view of a further embodiment of a shelf support arrangement according to the present invention, in a disassembled state thereof;
- Figure 12 is a median longitudinal sectional view along the section plane F - F of the shelf support arrangement shown in Figure 11, as viewed at a moment preceding the full insertion thereof;
- Figures 13A and 13B are a perspective view and a bottom view, respectively, of a specific variation in the embodiment of a shelf support arrangement according to the present invention;
- Figure 14 is a bottom view of a further, more complete variation in the embodiment of the shelf support arrangement shown in Figures 13A and 13B.

In certain passages of the following description, some elements or members of the arrangement will be defined and indicated in the singular, even if these same elements and members are illustrated in pairs both in perspective and cross-sectional views with respect to a plane of symmetry in the corresponding drawings. However, far from being a factor of confusion, this has been rather intended to facilitate a better understanding of the text, since it simplifies the description and a more immediate understanding of the same drawings.

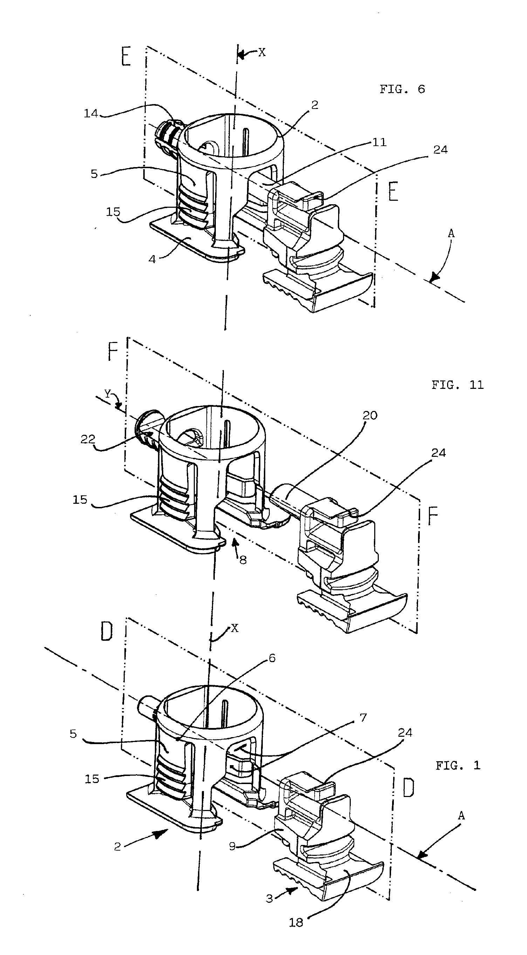

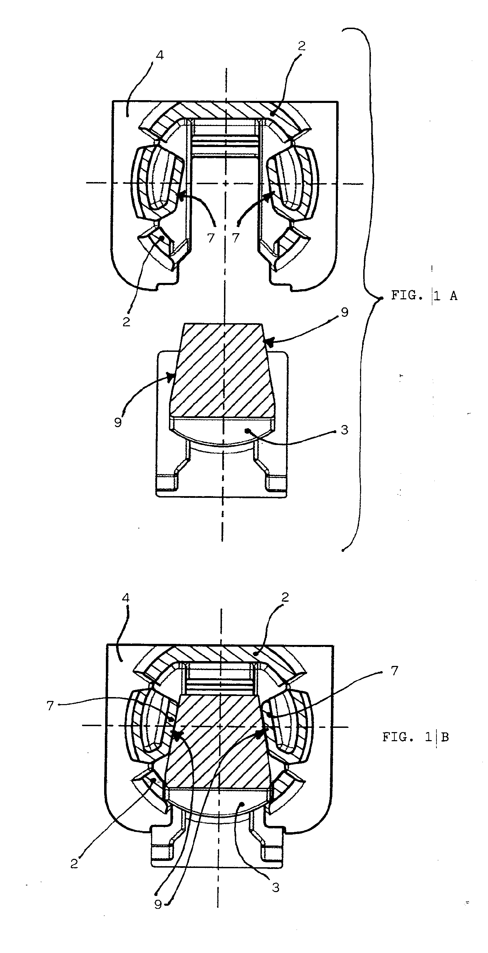

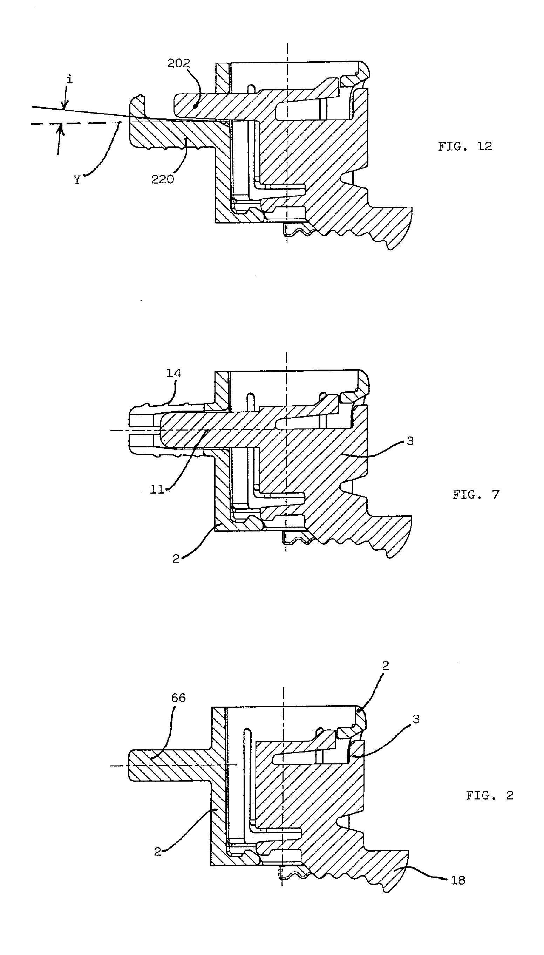

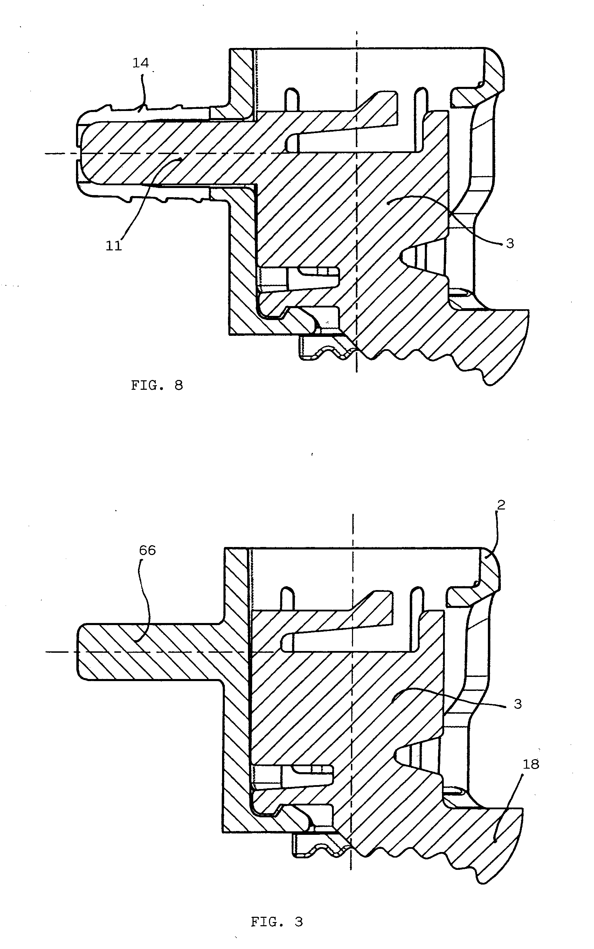

With reference to Figures 1, 2, 3, 4 and 5, a shelf support arrangement according to the present invention is comprised of just two separate pieces, of which a first piece forms the body 2 and the second piece is the actuating member 3. Said body 2 has a substantially cylindrical hollow shape and is provided with a plate 4 that, on a side thereof, acts as a base. In addition, the side surface thereof is provided with a first approximately rectangular portion 5 that is connected to the same body via a side 6 of said portion itself.

This portion 5 is therefore able to be pushed from the inside to the outside elastically, since it is capable of hinging on said side 6 thereof.

At the free end portion thereof, said same portion 5 is curved towards the interior of said body and, at that same end portion, it has an edge 7 that is arranged and oriented so as this is going to be better explained further on in this description.

With reference to Figures 1 and 1A, it can be readily appreciated that said edges 7 are flared and in the shape of a frustum of cone, while said surface 9 is given a corresponding frusto-conical contour so as to be able to get inserted between said edges 7 and cause the latter to expand, i.e. move apart from each other. Moreover, further to the obvious symmetric character of the representations in the Figures, it will also be appropriate for the axis of symmetry A to substantially coincide with the direction of displacement of the actuating member 3.

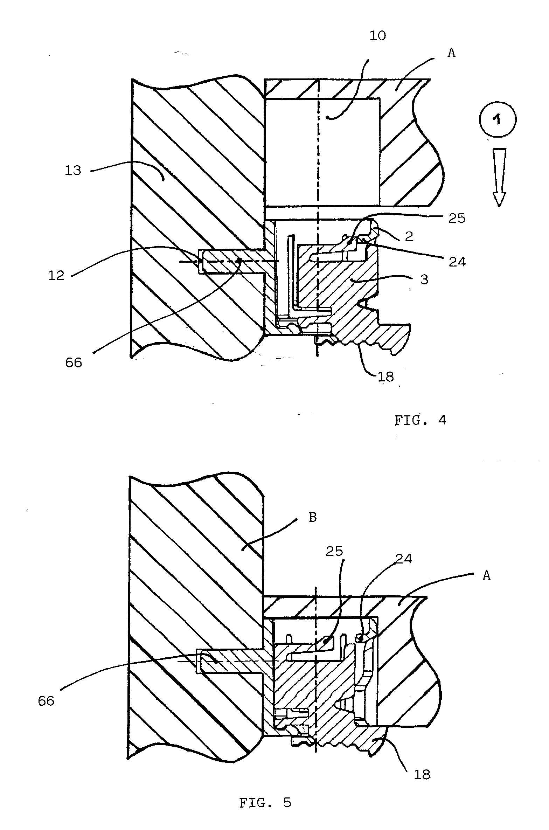

In particular, Figures 2 and 3 show a median planar cross-sectional view of the above-described parts, with said actuating member 3 in a pulled out and inserted condition, respectively, as this is in fact best represented by the mutual positions of the edges 7 and the surfaces 9.

The actuating member 3 is comprised of a single piece, which is capable of getting inserted in a specially provided aperture 8 in the body 2, up to a point at which it is completely thereinside. The same actuating member 3 is provided - on one or more sides thereof - with corresponding surfaces 9 that are arranged and oriented so that, by inserting said actuating member 3 in the body 2, said surface 9 will first come into contact with said edge 7 and then, as said actuating member is further inserted therein, pushes it outwards, thereby increasing the overall size of the body 2.

Since the latter is inserted in an appropriate accommodation 10 provided in the part A of the cabinet, the expansion of the body 2 forces it to press against the walls of said accommodation and, ultimately, to oppose any possible pull-out action or accidental coming off.

The body 2 furthermore has a stationary portion, which is adapted to be inserted in the accommodation 12 provided in the part B of the cabinet; this stationary portion is an extension 66 that protrudes from the body 2, preferably on the opposite side of said body 2 with respect to the part in which said actuating member 3 is inserted.

The way in which this simplified embodiment of the inventive shelf support arrangement operates is as follows: with reference to Figures 4 and 5, the shelf support arrangement is in the first place applied on to the vertical side B of the cabinet by inserting said extension 66 in the corresponding accommodation 12 provided in the same vertical side, thereby bringing about a first connection of the shelf support arrangement with one of the two parts of the cabinet to be joined together. This occurs without any risk for any piece to accidentally come or fall off from the shelf support arrangement during said first insertion thereof.

Immediately thereafter (Figure 5), the part A of the cabinet, which is a horizontal surface, i.e. shelf provided with a proper accommodation 10 in the case being considered, is first brought close and then applied on to said shelf support arrangement in such a manner as to enable the latter, as previously attached to the side B of the cabinet, to move with its body 2 into the accommodation 10 provided in the same part A of the cabinet (Figure 5). Finally, a last operation is performed to act on the rear handling appendix 18 of the actuating member 3, e.g. by pressing with a finger thereupon, in order to cause it to slide in a fully manual manner, thereby inserting it in or pulling it out of the body 2. In this way, said first portion 5 is forced, in the direction of the aperture, against the corresponding inner surface of the accommodation 10 in the part A of the cabinet, thereby creating a pressure that is effective in keeping said body 2 locked relative to said shelf or part A.

Further advantages of the inventive arrangement shall be described in greater detail below with reference to an improved embodiment of the inventive arrangement itself.

In this connection, Figures 5 through to 9, which reference should be made to, can be noticed to illustrate the case in which said actuating member 3 is provided with an elongated member 11, arranged on the opposite side of said body 2 with respect to the part in which said actuating member 3 is inserted.

When this actuating member 3 moves into the body 2, the elongated member 11 comes out on the other side thereof to get inserted in the respective accommodation 12 provided in the part B of the cabinet, thereby enabling the two parts A and B of the same cabinet to be joined together. Moreover, said actuating member 3 and said elongated member 11 are advantageously made integral with each other as a unitary piece.

It may therefore be readily appreciated that a first result is hereby achieved: as a matter of fact, the shelf support arrangement made in this way enables two different, distinct parts A and B to be removably joined together, although it is comprised of just the above-described members 2 and 3, actually.

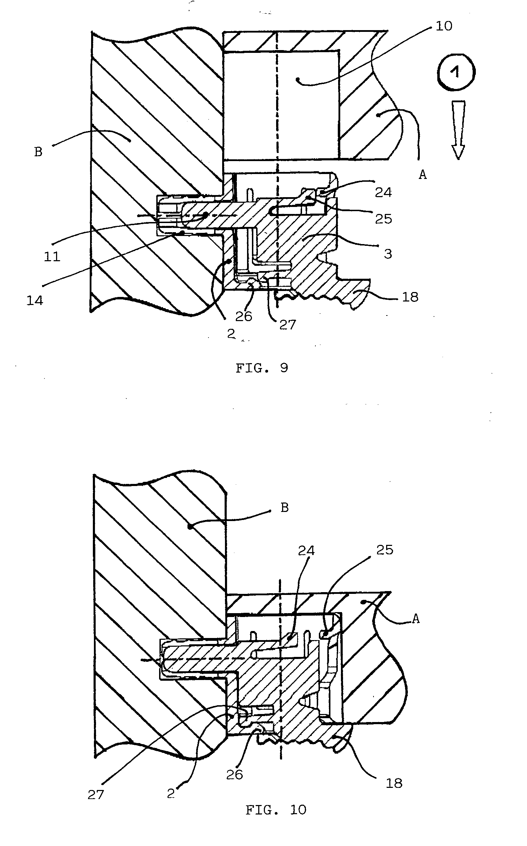

Referring again to Figures 6 to 10, an advantageous improvement of the inventive arrangement lies in providing the outer surface of said body 2 with a second elastically expansible portion 14. The latter is constituted by a cylindrical member arranged on the outside of the body 2 and:
- aligned with said elongated member 11,
- in which there are provided some slits 15 to enable this same second portion 14 to be expanded from the inside towards the outside,
- having such a diameter and such a length as to be able to accommodate said elongated member 11 thereinside, when said elongated member 11 is pushed outwardly owing to the actuating member 3 so moving solidly.

At this point, it can therefore be readily and easily appreciated that, when the actuating member 3 is acted upon, thereby getting inserted in the body 2, two locking actions are automatically performed at the same time; in fact, further to the first portion 5 being pressed and locked against the accommodation 10 provided in the part A of the cabinet in the afore described manner, this also causes the second portion 14 to move into pressing and locking against the accommodation 12 provided in the part B of the cabinet.

Also readily appreciated will be the fact that the inner surfaces of said second portion 14 and the outer surface of said elongated member 11 must be given a suitable shape, e.g. featuring frusto-conical mutually matching contours, so as to allow for the desired expansion effect. However, the various construction options that may be selected or implemented to this purpose are generally within the ability of those skilled in the art, so that they shall not be explained here any further.

With particular reference to Figures 1 and 6, an advantageous improvement further consists in providing said first portion 5 with one or more relieves or ribs, preferably featuring a saw-toothed or serrated pattern and facing downwards. This provision, along with the ability of said first portion 5 to bend outwardly, facilitates the same portion in getting locked against the inner surface of the respective accommodation 10.

For these ribs to prove fully effective, they are advantageously arranged on respective planes extending orthogonally to the axis X of said cylindrical body 2, substantially in the same way as said bending sides 6, so that said ribs are enabled to most effectively resist pull-out forces tending to remove the body 2 from the respective accommodation 10.

The way in which the shelf support arrangement according to the present invention works should at this point be fully clear: with reference to Figures 10 and 11, when the part A of the cabinet is required to be joined with the part B of the same cabinet, all it takes to perform such joining is to insert the elongated member 11, which will already have been partially inserted in the respective second portion 14 of the main body 2, in the proper accommodation 12 provided in the part B to that purpose.

As an alternative option thereto, it is possible for the elongated member 11, upon it having been inserted, to be immediately locked against the part B by shifting the actuating member 3, thereby causing the portion 5 to expand, and the part A to be then slipped and inserted from above so that it applies with its accommodation 10 against said arrangement, thereby getting automatically locked in position by itself owing to the action of the saw-toothed ribs 15.

Going back to the main procedure, said parts A and B are appropriately moved closer to each other and the outer portion of the actuating member 3 is acted upon, even by pressing it manually, thereby causing the same actuating member to be introduced into said body 2.

This insertion of the actuating member automatically and concomitantly causes:
- said first portion 5 to open out against the corresponding inner surface of the accommodation 10 in the part A of the cabinet, and
- said second portion 14 to expand so as to press against the respective surface of the accommodation 12 in the part B of the cabinet, thereby creating a pressure that prevents said central body from displacing any further relative to both said accommodations and, ultimately, bringing about the desired coupling of said parts A and B with each other.

Furthermore, this connection will of course prove very stable and firm, since the pressure between said two portions of the central body and the actuating member, and namely the pressure of the portion 14 against the elongated member 11, is such as to exert an opposite force that, owing to the just slight conicity of the contours and, above all, the resisting effect of a pair of mutually engaging detents 26, 27, will not rise above, i.e. overcome the friction needed to release said actuating member 3 and cause it to move outwards. This circumstance is therefore effective in also ensuring said central body to be automatically locked in position between said two parts A and B and, ultimately, the desired connection to be achieved without any further handling or operation being required.

A further advantage is additionally achieved when said two parts have on the contrary to be separated from each other: in fact, all it takes to do to this purpose is to pull out said actuating member 3 from the central body 2, thereby immediately restoring the initial conditions existing before the connection; pulling out the central body 2 can then be readily and most conveniently done, since this is not opposed by any significant resisting force apart from quite modest a frictional resistance exerted by the edge 7 of the body 2 on said surface 9, as well as by said portion 14 on said elongated member 11, wherein this frictional resistance is in no case be greater than the force applied to introduce said actuating member 3 during the insertion/coupling procedure.

Referring now to Figures 11 and 12, these can be noticed to illustrate a different embodiment of the inventive arrangement, which substantially differs from the embodiment illustrated in Figures 6 and 7 in that the elongated member 11 takes in this case the shape of a semi-cylinder 202 that is sectioned by a plane extending substantially through the axis Y thereof.

The corresponding portion of the body 2, which was represented as a sleeve enclosing the elongated member 11 in the formerly considered cases, becomes on the contrary a corresponding semi-cylinder 220 in this embodiment, which is sectioned by approximately the same plane and, of course, remains joined to, i.e. integral with the body 2.

However, this semi-cylinder 220 is not a perfect one. Rather, the sectioned planar surface thereof shows an inclination I relative to said axis Y, so that a slight interference is ultimately brought about between said semi-cylinder 202 and said semi-cylinder 220 when said actuating member 3 is introduced in the body 2, thereby practically causing said semi-cylinder 220 to be pushed outwards.

Owing to the elasticity of the bodies, the effect of such interference causes both the semi-cylinder 202 and the semi-cylinder 220 to slightly open out, so that these push each other outwards and, ultimately, increase the overall external size thereof.

The combined pressure exerted by them against each other and the inner wall of the common accommodation will therefore further assist in locking both the body 2 and the actuating member 3 in the final position thereof inside the common accommodation.

With reference to Figures 3, 8, 13A and 13B, wherein these last two Figures show a shelf support arrangement according to the present invention in a version adapted to be actuated by means of a screwdriver and, therefore, not provided with any appendix 18, a further improvement of the shelf support arrangement - capable of being applied to all afore described embodiments thereof - lies in the fact that said actuating member 3 may also be advantageously provided - instead of said external handling appendix 18 - with a recess 20 to be situated on the accessible side of the body 2, and oriented and arranged so as to make it possible for an appropriate tool, preferably a screwdriver, to engage it.

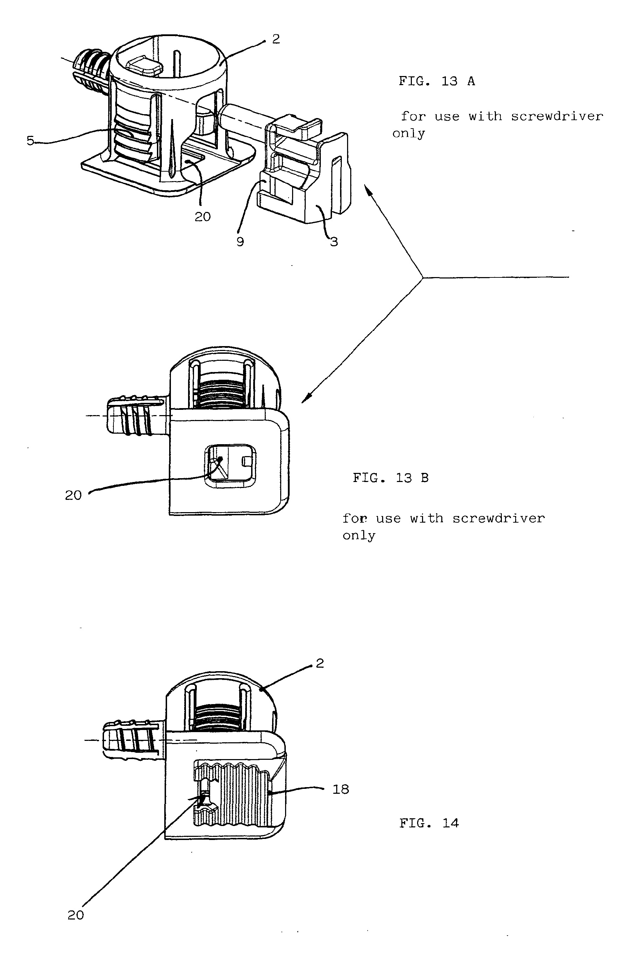

Most obviously (Figure 14), it is also possible for shelf support devices according to the present invention to be made, which are provided with both an appendix 18 according to the invention and said recess 20.

Finally, another advantageous improvement may be obtained in the following manner: with reference to Figures 1, 6, 11, 4, 5, 9 and 10, said actuating member 3 is provided with an engagement member 24 and sad body 2 is correspondingly provided with a detent 25, which are so made as to constitute, when appropriately combined and arranged, a kind of snap-fit system; in fact, the engagement member 24 is elastically flexible, i.e. can be bent elastically downwards and, when the actuating member 3 is inserted, it slides smoothly under said detent 25 under just a slight friction, and recovers its normal, i.e. raised position when it moves beyond said detent 25.

In this position, the actuating member 3 is therefore prevented from being capable of sliding off accidentally from the body 2 by the resistance opposed by the detent 25 against said engagement member 24.

However, this situation will not make it impossible for the arrangement to be released and removed when desired. In fact, when pulling out the actuating member 3 to that purpose, all it takes is to concomitantly press said engagement member 24 from above, thereby lowering it to such an extent as required to prevent it from being stopped by the detent 25.

## Claims

1. Shelf support arrangement for connecting two distinct parts (A, B) of a cabinet with each other, comprising a central body (2), acting as the main structure, and an actuating member that is movable relative to said central body, **characterized in that**:
- said central body (2) includes at least a first portion (5) adapted to project outwards from said central body,
- said first portion (5) and said actuating member (3) are provided with respective surfaces or edges (7, 9) adapted to engage each other when said actuating member is introduced with a rectilinear movement into said central body (2)

2. Shelf support arrangement according to claim 1, **characterized in that** said central body also comprises an extension (66) that extends radially outwards and is adapted to engage an appropriate accommodation (12) provided in a part (B) of the cabinet.

3. Shelf support arrangement according to claim 1 or 2, **characterized in that** said surfaces of said first portion (5) and said actuating member (3) are arranged and oriented relative to each other so that said first portion (5) is pushed outwards when said surfaces are so engaged with each other owing to said actuating member being so introduced.

4. Shelf support arrangement according to claim 3, **characterized in that** it further comprises at least an elongated member (11) adapted to selectively project from and retract into said central body, and that said actuating member (3) is adapted to impart a motion to said elongated member (11).

5. Shelf support arrangement according to claim 4, **characterized in that** said central body (2) is also provided with a second elastically expansible portion (14), which is so arranged as to at least partially surround said elongated member when said actuating member (3) is inserted into said body (2).

6. Shelf support arrangement according to claim 5, **characterized in that** said second elastically expansible portion (14) and said elongated member (11) are provided with mutually engageable surfaces, so that said elastically expansible portion (14) is caused to expand by the action of said elongated member (11) when said actuating member (3) is inserted into said body (2).

7. Shelf support arrangement according to claim 4, **characterized in that** said elongated member is constituted by a portion of a cylinder (202) sectioned with a slightly inclined plane (i) along the axis (Y) thereof, and that said body is provided with an outer portion (220), preferably in the shape of a semi-cylinder, adapted to slightly interfere with said portion of a cylinder (202) of said elongated member when said actuating member (3) is inserted into said body (2).

8. Shelf support arrangement according to any of the preceding claims, **characterized in that** said at least a first portion (5) is provided with a plurality of relieves (15) on the outer surface thereof.

9. Shelf support arrangement according to claim 8, **characterized in that**:
- said central body (2) has a substantially cylindrical or parallelepipedal outer surface,
- said relieves are constituted by respective saw-toothed ribs, and
- said ribs are arranged on respective planes that are substantially orthogonal to the axis (X) of said substantially cylindrical or parallelepipedal outer surface.

10. Shelf support arrangement according to any of the preceding claims, **characterized in that** said actuating member (3) and said elongated member (11) are firmly joined with each other and are preferably made integral with each other as a unitary piece.

11. Shelf support arrangement according to any of the preceding claims, **characterized in that** it is provided with a recess (20) that is accessible from the outside and is adapted to accommodate the tip of a tool, preferably a screwdriver.

12. Shelf support arrangement according to any of the preceding claims, **characterized in that** said body (2) and said actuating member (3) are provided with an elastically flexible engagement member (24) and a detent (25), respectively, which are adapted to snap-fit into engaging each other in an insertion position of said actuating member (3).
